# EUROPEAN PATENT SPECIFICATION

(11) **EP 3 951 162 B1**
(45) Date of publication and mention of the grant of the patent: **06.09.2023**
(21) Application number: 21189439.9
(22) Date of filing: 03.08.2021
(51) Int. Cl.: F03B 17/06, F03D 3/00, F03D 3/06

(54) **A WIND OR WATER TURBINE WITH AN ACTIVE AND PROGRESSIVE REGULATION OF THE RADIUS OF ACTION OF THE BLADES AND THE VARIATION OF THE AUTOMATIC ANGLE OF INCIDENCE**
EINE WIND- ODER WASSERTURBINE MIT EINER AKTIVEN UND PROGRESSIVEN REGELUNG DES WIRKUNGSRADIUS DER BLÄTTER UND DER VARIATION DES AUTOMATISCHEN EINSCHALLWINKELS
UNE ÉOLIENNE OU TURBINE À EAU AVEC UNE RÉGULATION ACTIVE ET PROGRESSIVE DU RAYON D'ACTION DES PALES ET DE LA VARIATION DE L'ANGLE D'INCIDENCE AUTOMATIQUE

(30) Priority: 04.08.2020 IT 202000019234
(43) Date of publication of application: 09.02.2022
(73) Proprietor: Ikaria S.r.l., 66054 Vasto (CH) (IT)
(72) Inventor: FARINA, Alessio, 66054 Vasto (IT)
(74) Representative: Emmi, Mario

(56) References cited:
- WO-A1-84/04362
- JP-A- S5 732 076
- US-A1- 2008 095 608
- US-A1- 2010 172 759
- US-A1- 2015 192 107

## Description

### Field of the invention:

The present invention refers to the technical field of vertical axis wind turbine (VAWT) which uses the lift of a wing area, comparable to the categories H-Rotor, Helical Blade or Darrieus and/or to the hybrids which even embed in Darrieuse a turbine Savonius, used in the transformation of the kinetic energy of wind into mechanical energy usable for several aims.

Particularly, the invention refers to a turbine capable of modifying the radius of the blades, that is to say their distance from the rotation axis Z, and their inclination, and therefore the angle of incidence with respect to the fluid acting on them, consequently varying the angular speed and the moment acting on the turbine.

### State of art:

Turbines, for example wind or marine turbines, exist since long ago, and include blades connected to a rotating axis. The fluid force (air or liquid) acting on the blades engenders a lift according to the profile and the angle of incidence of the blade, engendering a rotating torque on the axis which, can rotate accordingly. The rotating axis can feed any external utility, as for example the production and/or storing systems of electrical current, mechanical energy, etc.

The turbines can be of the type of fixed or variable geometry blades.

The turbines with fixed geometry blades are turbines which do not modify their geometry, and therefore do not vary their radial distance from the rotating axis. However, these turbines have several technical disadvantages.

For example, they are not much productive given that winds do not have a constant force and, as a result of their temporal fluctuations, make the turbines less productive which, after a starting speed increase, go back stopping because of the electrodynamic charge and of the sudden decrease of thrust on the blades.

In addition, the fixed geometry turbines cannot modify their rotating speed with respect to the one where the power unit would have the maximum output force or the maximum performance, unless they do not use a rotation variator.

Furthermore, the fixed geometry turbines must stop when the wind speed overcomes the threshold values of the project since they would risk breakage.

Lastly, the fixed geometry turbines which must get in a locked position because of the excessive high wind speed, need to use a brake whose dimension must be adequate to fulfil both the slowing down and the upkeep of the stationary position.

Because of such technical disadvantages, variable geometry turbines have been conceived and are known.

Currently, several schemes for the modification of the turbine's geometry exist, both active and passive.

In the most cases, such turbines vary the incidence of the blade with respect to the direction of the motion exclusively, modifying the lift or the air resistance ability according to the result they aim to achieve.

In other cases, the geometry modifications of the rotor have been carried out on the turbines on the type of Savonius, in order to reduce the resistance to the progress of the blade which is progressing the trajectory in an opposite-wind direction since the functioning principle of such turbines is based on different drag coefficients of the semi-cylinders engendering the torque, and therefore a different conception from the Darrieus type.

Furthermore, there are variable geometry blades systems which fulfil the variation of the radius of the blades passively, that is to say they are projected for using forces as the centrifugal one which vary depending on the variation of the angular speed, and consequently buckle the geometrical structure of the turbine.

Lastly, it is possible to find systems with the modification of the radius of the rotor through more or less simple mechanisms to increase the hours of use of the blade according to several climatic conditions, increasing the reliability in the presence of extremely high wind speed in some instances, and the productivity in other instances. In that case, therefore, it is substantially present a system which varies the distance of the blade with respect to the rotating axis, thereby varying the torque acting on the axis as a function of the climatic conditions. In the event of strong winds, the blades can be retracted close to the rotating axis stopping the torque, while in little wind conditions they can be extended to the maximum for optimizing the efficiency.

In this regard, for example, the following publications are known: JPS5732076A, NL7606729A, US Pat No. 7,766,601, US2009196753A1, CN102606401 (A), WO2013/008200A1, US4624624A, CN104912742 (A), US2015192107.

For example, the publication US2015192107 describes a blade turbine wherein the blades are supported by primary arms connected to a rotating support tower. In turn, the primary arms are supported by secondary arms creating a support arms system like an umbrella and with the blades actually opening and closing like an umbrella. Thus, it is possible to select a predetermined open position of the blades thereby setting their distance from the rotating axis, and therefore setting the obtained power according to the operative conditions. The blades are hinged to the support arms with a hinge system having three degrees of freedom. An actuating system enabling the modification of the blade inclination (also called PITCH) is provided thereby modifying its angle of incidence and then its lift. A sensor system can measure the pressure conditions (for example depending on wind) acting on the blade, and a controller controls the open or closed position of the blades and of their angle on incidence (PITCH) too.

### Technical problem:

In accordance with the known solutions, the incidence of the blades is controlled independently from the extended or retracted position occupied by the blades with respect to the rotating axis. For example, in US2015192107 there are actuators controlling the angular position of the blade according to the values of pressure or direction of the flux acting on the blade. In this way, the obtained efficiency is rather low.

Furthermore, the missed synchronism between the Pitch angle and the distance of the blades with respect to the rotating axis can cause damaging vibrations of the turbine throughout its functioning and it reduces its overall reliability.

### Solutions to the technical problem:

Therefore, there is the necessity of a solution wherein the turbine can modify the overall geometry, and therefore not only the radial distance of the blades from the rotation axis but even the inclination, that is to say the angle of incidence through a solution which enables maximizing the efficiency in all operative conditions.

Therefore, the peculiarity of the subject application lies on the ability of the turbine of modifying its radius of action constantly and the angle of incidence of the blades subordinately, varying its angle speed and the moment acting on it through a control system which places the blades in the most efficient area depending on the climatic conditions of the moment.

Moreover, there is the necessity of obtaining turbines wherein the solidity coefficient of the turbine is modifiable efficiently (a coefficient, preferably in use for Darrieus turbines, which defines the self-starting ability of the turbine. This coefficient varies in an inverse proportional way to the overall radius).

Therefore, these and other aims are obtained with the present turbine as per claim 1. Such wind or water turbine (1) comprises at least two or more blades (3) and a rotating shaft (2) whereto the said blades (3) are connected, each blade being connected to the rotating shaft through a system of rods (10) so that such rods can pass from an extended and a retracted position thereby enabling a variation of the radial placement distance of the blades with respect to the rotating shaft.

Each system of rods is connected, preferably hinged, to the corresponding blade in at least one point so as to further enable the blade rotation which modifies the angle of incidence of the blade.

Preferably, the blade rotation occurs around the said hinge point of the system of rods. In accordance with the invention, the said system of rods (10, 12) is further configured to modifying the angle of incidence of the blades according to the specific extended or retracted position adopted by the said system of rods so that each blade adopts a specific angle of incidence as a function of its radial distance from the rotating shaft (2).

Thus, the said technical disadvantages are solved effortlessly.

Particularly, the turbine can work more constantly over time, increasing, among other things, the global performance of the machinery and solving problems linked to the self-starting and to the hard braking throughout storms.

Within this context, in accordance with the suggested solution, it is possible to use the kinetic energy of wind more efficiently and constantly, and this is carried out through a control system within the turbine which enables the identification of the optimal position of the blades by analyzing the parameters of the fluid in question acting on the blades.

Optimal position refers to the regulation, simultaneous and not independent among the single blades, of the distance of each blade with respect to the rotating axis and, contextually, the subordinated variation of incidence of the blade with respect to the position adopted by it within the potential diameters of the turbine.

The angle of incidence, also called Pitch angle, is commonly defined, as well known, as the angle formed by the wing profile chord (in this case the wind blade) with the direction of the incident flux.

These regulations enable to have still the maximum aerodynamic performance of the wing profile for each wind speed (or fluid in general both gas and liquid), moreover guaranteeing the self-starting of the turbine, the possibility of reducing the angular speed throughout the strongest blasts and the obtainment of a superior amount of annual hours of productivity.

This capability of adaptation preserves its duration, being able to reduce the radius action to the minimum and stalling the blades in storm conditions. Furthermore, the control system can vary the position of the blades over time to ensure the alternator or the utility connected to the blade to work still under the maximum output conditions reachable for the current wind speed.

Furthermore, when the production occurs in alternating current directly, the need of a rotations variation system is needless, having the possibility to maintain a constant number of rotations thanks to the adaptability of the turbine and guaranteeing a constant output frequency.

The possibility of operating at lower wind speeds furthermore enables to limit the acoustic pollution produced by the turbine.

The features of the turbine furthermore enable an adaptability relative to the different flow rate and speed values of the fluid in which it is plunged which vary depending on seasonality throughout the year.

The last result is the reduction of the amortization times of the investment, a better yield of the system, a lower consumption of energy deriving from fossil fuels, an increase of the global yield and a better economic return for the operative life of the turbine.

The said radial distance variation of the blades from the rotating axis is preferably controlled and managed by a specific control system which automatically places the blades at the optimal distance with respect to the fluid conditions in which the turbine is immersed, according to a control algorithm.

Preferably, but not necessarily, the said control system can be of the type of a closed-loop or of the PID type based on the "*machine learning*".

The actuating system which controls the change of the angle of incidence can be regulated so as to have a wide range of angles of incidence, each one adopted by the blade as a function of a specific radial position adopted by it. For example, it is possible to have, on the basis of the wing profile in use, a minimum angle of incidence (or rather, equal to the stalling one) in correspondence of a fully retracted position of the blades which would correspond to a strong thrust of fluid to then vary the incidence up to the maximum of the thrust the wing profile can engender, for example according to a linear course on the increase of the distance adopted by the blades, and therefore in correspondence of inferior thrust conditions of the fluid.

Therefore, the turbine is conceived with the ability of extending its operative diameter, passing from a nominal performing radius to a superior starting one, with the increase of the turning torque consequently. Such solution enables the turbine starting the rotation even at low speeds of the fluid conditions.

Furthermore, the active modification of the incidence of the blades and the operative diameter enables their placement at the minimum difference condition between the wind speed and the tangential speed continuously, a configuration which ensures a superior functioning constancy even in the presence of inconstant winds.

Working within the *range* of nominal windy condition of construction, the maximum output value of the generator can be reached by positioning the turbine according to its need and to the current wind speed.

Furthermore, in conditions of strong wind or blasts, is it possible to shrink the operative radius of the blades below the nominal diameter zone, preserving the structural integrity but keeping the production active.

In stormy conditions, it is possible to place the blade in a protection position, carrying the rotor to the minimum radius for having the smallest air-exposed surface and if necessary varying the incidence of the blades so as to stall them. Thus, the braking system can be undersized with respect to the turbines having the same nominal capacity.

Furthermore, it is possible to produce the alternating current without the need of a transmission regulating the rotations of the turbine, taking advantage of the radius variation of the rotor and of the incidence of the blades for keeping constant the angular speed ω over time.

The variable geometry turbine can modify the TSR values directly correcting the ω (angular speed) and R (rotating radius) factors exactly which, varying together with incidence, enable obtaining a superior force coefficient for each windy condition.

The turbine with variable geometry rotor, having the ability of working varying its TSR, can contain the sound emissions decreasing together with the decrease of the tangential speed of the blades.

Lastly, the ability of functioning within a superior time interval expressed in hours/year generally, enables the subject turbine to increase the global yield, to lessen the costs of the investment and to have a superior economic return over time.

Therefore, advantageously, the actuating system hereinabove regulates the Pitch of the blades as a function of the radial distance value occupied by the blades themselves, further starting in correspondence of a motion of the system of rods which moves radially these blades.

Advantageously, an actuating system (12, 13) controlling the said rotation of the said blade can be included so as to place such blade on the basis of a specific angle of incidence.

According to the invention, the actuating system is synchronized with the system of rods so that the said actuating system starts modifying the angle of incidence of the blades as a function of a specific extended or retracted position adopted by the said system of rods.

For example, the actuating system can be a rod being part of the above-mentioned system of rods.

For example, the system of rods can provide an additional rod (12) cooperating with the remaining rods of the system and arranged so as to exert a specific force which engenders a rotating momentum onto the blades according to the extended or retraced position of the blades.

Advantageously, the system of rods (10, 12) can therefore be an articulated system of rods so that such rods can pass from an extended position to the retracted position which corresponds to the position wherein such rods constituting the articulated system are closed on themselves and contextually control a modification of the incidence angle of blades.

Advantageously, each system of rods can be made up of at least two rods (10) which are slidingly connected to the shaft through one of their ends alongside a first sliding guide (9) which develops along at least one section of longitudinal length of the rotating shaft (2) and by the opposite end being hinged to the blade, at least one of them, so that the sliding of the said rods alongside the rotating shaft determines an extension or a retraction of the system of rods causing the blades to move away from or approach to the shaft.

Advantageously, the said at least two rods are X-shaped crossed.

Advantageously, the said actuating system can further comprise a second sliding guide (13) which develops along at least one section of the rotating shaft length according to an inclined direction with respect to the development line of the first sliding guide so that the development line of the second sliding guide (13) is incident with respect to the development line of the first sliding guide (9).

Advantageously, as mentioned above, at least one rod (12) with a predetermined length can be comprised, slidingly connected through one of its ends along the said second sliding guide (14) and through the opposite end being connected to the blade in a point which engenders a rotating momentum of the blade around its hinge, the said rod (12) end being configured so as to move integrally with at least one rod (10) end sliding along the first sliding guide (9) so that, in correspondence of a contextual sliding of the rod (12) end and of the rod (10) end relative to the articulated system of rods, the incident paths determine a transmission of the rod (12) force to the blade so as to cause, contextually to the extension or retraction articulated motion of the system of rods, a contextual rotation of the blade around the hinge thereby modifying the inclination of the blade according to the extended or retracted position the blade is occupying.

Advantageously, the rod (12) is thus movable along a direction so as to transmit the said force.

Advantageously, the rod (12) can be a stiff rod.

Advantageously, the rod (12) can be mounted slidingly within an axial channel obtained along the axial length of the rod (10) so as to move integrally with the rod (10).

Advantageously, the rod (12) can be coupled externally to the rod (10) so as to move integrally with the rod (10) but being still sliding with respect to it.

Advantageously, a screw (6) rotatably arranged within an axial channel of the rotating shaft (2) and a motor (5) causing the screw to rotate can be comprised, the two said rods of the articulated system of rods connecting each one to the said screw through a scroll (7A, 7B) meshing with the screw so that the rotation towards a direction or towards the opposite direction causes a translation of the scrolls which cause the two X-shaped rods to close on themselves or to stretch.

Advantageously, the scroll (7A, 7B) can connect integrally with the end of the rod (12) translatable through a hinge (18).

Advantageously, a control system controlling the extension and/or retraction of the articulated system of rods can be comprised as a function of one or more external parameters acting on the turbine.

Here, it is even described the use of a turbine as per one or more of the hereinabove claims, for accumulating energy from air or from a liquid.

Lastly, it is here described even a method for producing energy through a turbine (1) in accordance with one or more of the hereinabove previous features.

The method comprising the activation of the turbine and with the blades that, automatically, adopt a predetermined angle of incidence as a function of the radial distance of the blades from the rotating shaft, the method providing:
- The acquisition of parameters of the fluid moving the turbine;
- The determination of the correct radial position of the blades;
- The positioning of the blades in the said correct radial position, the said positioning causing an angle of incidence of the blade function of the value of radial distance reached by the blade;
- And wherein the said radial arrangement is modified depending on varying of the motion conditions of the fluid wherein the turbine is immersed.
- Advantageously, the charge and/or resistance the utility transmits contrasting the rotation of the turbine.

### Brief description of the figures:

Further features and the advantages of the present turbine, as per the invention, will be clearer with the description hereinafter of some of its embodiments, only as a nonlimiting example, referring to the attached drawings, wherein:
- Figure 1, a perspectival illustration of a turbine model as it is intended in the present application to the maximum extension and grade of incidence of the blades and corresponding nomenclature.
- Figure 2, illustration in front elevation of the turbine base shown in Figure 1, for making the details within the rotating shaft (2) apparent, particularly the motor (5) connected to the rolled screw (6) and the scroll (7A), the motive slot (9) and the guide slot (14), the respective hinges.
- Figure 3, perspectival front illustration of two subject turbines in the two extreme operative positions, to the maximum extension on the left and to the minimum extension on the right.
- Figure 4, theoretical overlapping in the layout in transparency of the two extreme operative positions of the turbine, and corresponding slipstream of the relative working diameters:
   1. "r0", when the turbine radius is minimum therefore corresponding to an angle of incidence "α" of the blades.
   2. "r1", when the turbine radius is maximum and therefore corresponding to an angle of incidence "β" of the blades.
- Figure 5, a perspectival illustration of the hinges placed on one blade and a system placed on the rotating shaft for carrying out the variation of incidence.
- Figure 6, a perspectival front illustration with two of the three hided blades and corresponding nomenclature.
- Figure 7, a theoretical overlapping in transparency of the two extreme operative positions of the turbine, as per a perspectival front view for observing the correlation among the repositioning of the scrolls from "A0" to "A1" and the subordinate variation of the radius of the turbine between "r0" and "r1".
- Figure 8, front elevation of the theoretical overlapping in transparency of the two maximum operative positions of the turbine, suitable to show the specific variations obtained in the motion of the scroll between the last positions "A0" and "A1" and the movement of the spheric hinge (13) with respect to the guide slot (14), even described in Figure 2;
- The figure 9 is a further detailed view which shows the hinge system of the blade with the rod 10 and the rod 12.
- The figure 10 shows an executive detail relative to an embodiment of the Pitch with respect to the one shown in figure 9 with the rod 12 still sliding within the channel of the rod 10.
- The figure 11 shows a further embodiment with respect to figure 9 and 10 wherein the rod 12 rotates instead of translating.

### Description of one or more embodiments:

A turbine enabling the variation of the useful rotating radius can be built by using different mechanical schemes, all of them more or less equivalent in performances but not equivalent in the ratio among the obtained variation, forces and necessary movements for carrying out such modification. Hence, it is possible to use a cross-pieced system of arms, an independent system of arms or a telescopic system of arms. For carrying out the radius variation, it is possible to use a rolled screw and nut screw system with or without the recirculation of spherics as in the present application, but also linear pneumatic or hydraulic actuators and linear electrical motors. Furthermore, the radius variation can be entrusted to a more or less complex mechanisms as the iris one wherein the blades are supported through arms hinged to a rotating ring nut which modifies the radius of the turbine because of the rotation.

With reference to the drawings attached to the present invention, the production scheme of a model of turbine, such as wind or water turbine with vertical axis with variable geometry is described indicatively.

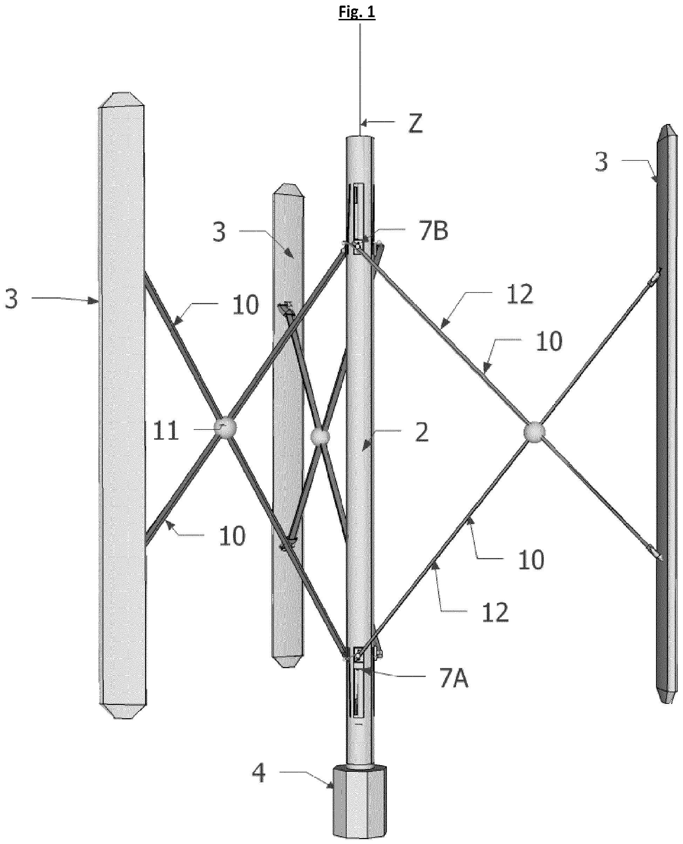

Turbine (1) means the completed machine in its entirety, which is specifically constituted by a rotating shaft (2) rotating around the axis Z and by a number of blades of the type of load-bearing (3), in an equal or superior number to two, suitable to produce a turning torque so as to cause a rotation of the shaft (2) around the axis Z. As per the hereinabove paragraphs, the said turbine (1) will have the possibility to transfer the mechanical energy of the shaft (2) to several systems subject to the turbine itself, as for example an electrical generator or a compressor, in the modalities already known to the person skilled in the art, which, hence, will not be illustrated in detail, generally indicated as utility (4) (Fig.1).

Each blade (3) is the longitudinal development of a wing profile, useful for engendering the necessary thrust for the shaft rotation (2); the usable profile can be linear-shaped in the case of H-Rotor or helical turbine, in this case with the axis along which the helix parallel to the rotating shaft Z develops, using the configuration Helical Blade already known in the field.

In the preferred configuration of the invention, the shaft is at least in part internally hollow for housing the components hereinafter described.

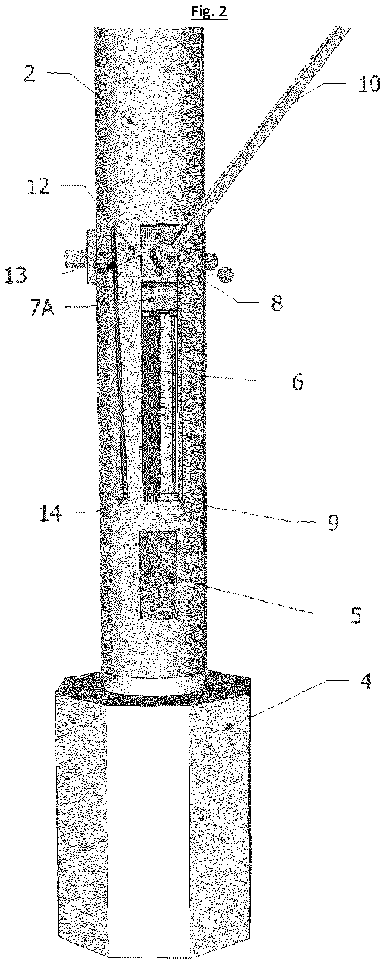

Particularly, the rotating shaft (2) houses a motor (5) in its inner hollow (see figure 2). A rolled screw (6) (therefore, a threaded screw) connected to the motor is placed yet again within the hollow so as to be able to rotate clockwise or counter-clockwise. The screw spreads out along the axis shaping the channel in which it is housed.

The rolled screw is coupled with two nut screws (7A, 7B) therefore shaping two meshing scrolls, and therefore with an internal thread complementary to the one of the screws and coupling with the thread of the screw.

Thus, depending on the direction of rotation of the screw, the nut screw which meshes with the screw is compelled by a translation motion along the axis of the screw. Therefore, the shaft forms two slots wherefrom the nut screws protrude partially and along which they are slidingly mounted. As it is explained below, the systems of rods supporting the blades are connected to the nut screws.

Hence, with reference to figure 1, it is highlighted a fully extended position of the blade, or rather a position wherein the blade is at the maximum radial distance from the rotating axis, therefore from the shaft (2). Indeed, the two scrolls are in an end stop position with respect to the slot where they are slidingly placed and therefore in a position carrying the articulated system of rods to a condition of maximum extension. There are two slots spaced from each other (that is to say overlapping) as highlighted in figure 1. The movement of the scrolls towards the opposite side of the slot would cause the articulated system of rods (therefore a sort of pantograph system) to close again thereby moving close the blades to the shaft.

The nut screws, or scrolls, are described as: the scroll (7A) placed below with respect to the rolled screw (6), right-leaning and sliding with respect to its slot; the scroll (7B) placed in the high part of the rolled screw (6) left-leaning and sliding with respect to its slot overlapped to the preceding one. The screwing direction can even be switched between the two nut screws; for illustrational sake, we suppose the scheme as described (Fig.1; Fig.2).

Carrying on the structural description of the invention, the nut screws (7A; 7B) house an idle pin (8) radially, whereon an arm is fixed for supporting the blade (3) (see figure 2).

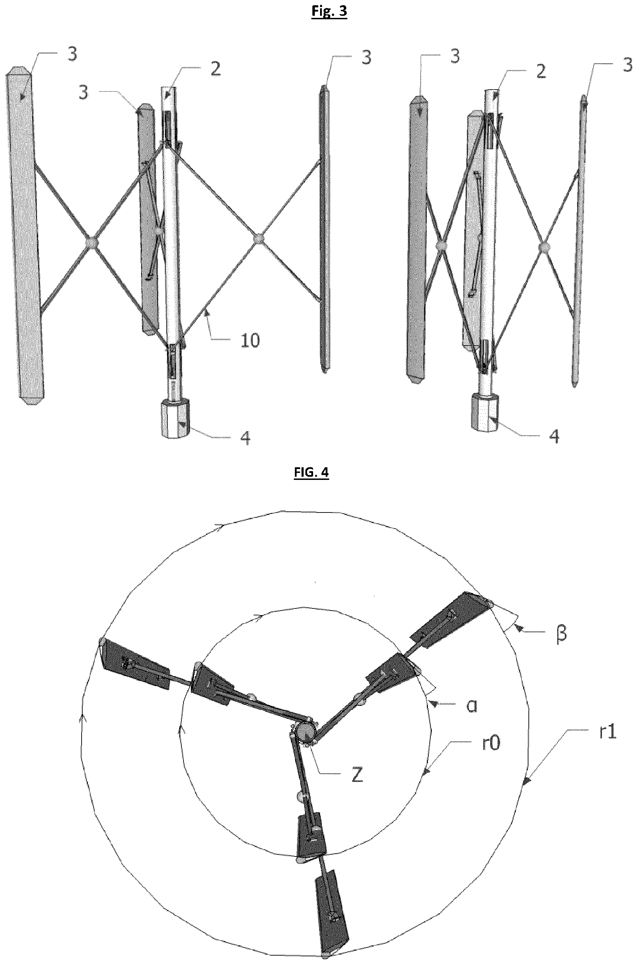

Both nut screws (7A; 7B) have the ability to translate along the rolled screw (6) as a result of its rotation, dragging the arms supporting the blades (10) constrained to the idle pin (8) (Fig.3).

Therefore, the shaft (2), as previously said, presents a number of slots (9) developing on the circumference in longitudinal direction with respect to the axis Z of the shaft (2).

The number of slots is generally equal to the number of couples of arms (10) each couple supporting a blade (indeed, in such case, a couple of rods forming an articulated system of rods is coupled with two slots).

More in detail, with reference to figure 1, each blade is supported through an articulated system of rods forming a sort of extendable and/or retractable pantograph. Each articulated system of rods is made up of a couple of X-shaped arms 10 hinged through a central hinge 11 which enables a translation of the entire hinge 11 along the arms 10 or a translation of at least one of the two arms 10 with respect to the hinge 11 which should be constrained to the other arm. Therefore, the two arms become a pantograph system which can retract on itself closing the X on itself or it can extend thereby varying the distance of the blade from the rotation axis 2. A couple of X-shaped rods supports through one of their ends the blade and through the opposite end each one of the two rods is connected respectively to a scroll engaged with the screw and each scroll sliding along its own slot.

The rolled screw can be a single screw which is threaded in two opposite directions (right-leaning and left-leaning) respectively in two of its sections intended to hold the corresponding scroll. Thus, depending on the rotation direction of the screw it is possible to control the extension or the retraction of the articulated pantograph system supporting each one blade through the translation of the nut screw (or scroll) in one direction or in the opposite direction.

For example, with reference to figure 1, starting from the maximum extended radial position of the blades, it is possible to activate the screw according to a direction of rotation so that the two scrolls slide along the slot so that the one positioned above moves from the stop end position below upwards and the one positioned in the lower slot moves from the stop end position above downwards and therefore, as a whole, closing again on itself the articulated system of rods. Differently, in a more complex solution, it could be possible having two independent starting motors each one connected to a screw (therefore two different screws) and each screw controlled during rotation towards a direction or another direction in order to move the corresponding scroll so as to control an extension or retraction motion of the articulated pantograph system of rods.

As it is possible to deduce from the figures, each couple of rods (10) supporting the blades (3) lays along a line tangent to the rotating shaft (2) and it is hinged through the idle pin (8) directly to the nut screw (7) passing through the slots (9) (Fig.4).

The arms (10), laying in couple along the same line tangent to the shaft (2) specularly, are, as previously said, hinged to each other through a hinge (11) which is preferably, but not necessarily, of floating type (11) so as to create a pantograph structure (particularly overall X-shaped).

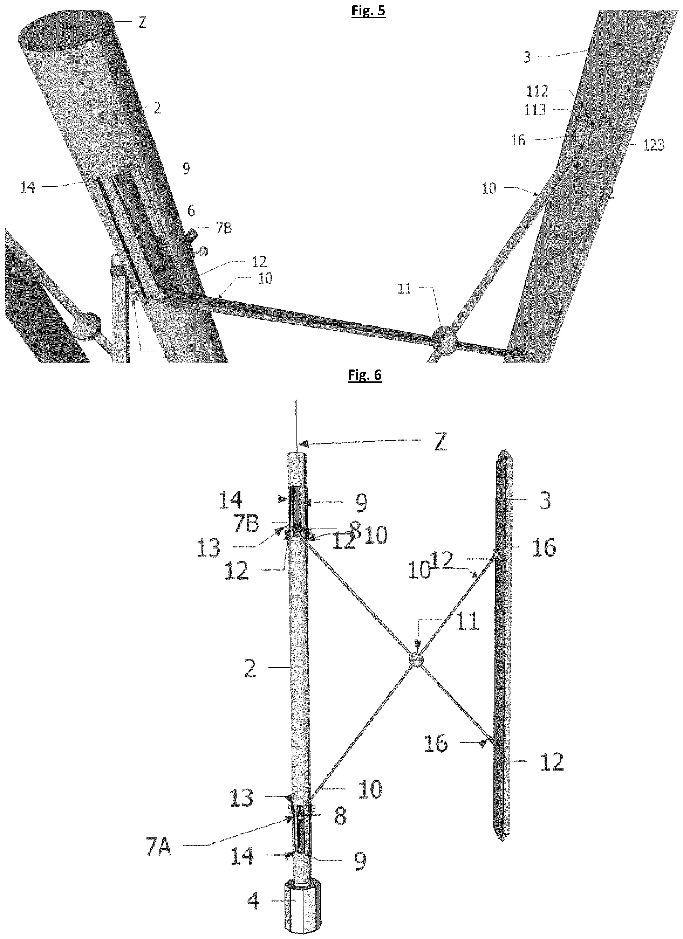

The arms (10), as per figure 5, have a construction line rectilinear from the idle pin (8) until arriving in proximity of the blade (3), where the construction line laterally changes direction with respect to the surface whereon the arm (10) leans for being hinged approximately at 1/3 of the chord of the blade (3) (Fig. 5 and Fig. 9 and 10). The hinge is a hinge having a specific number of degrees of freedom so as to also enable the variation of the angle of incidence of the blade.

Preferably the hinge in question has two degrees of freedom.

Besides the slot 9 there is at least one additional slot 14 positioned next to at least one slot 9 and with a development line which is inclined (therefore incident) with respect to the slot (9), as it is shown in figure 2. The function of such slot 14 is to enable a modification of Pitch according to the extended or retracted position which is adopted by the blades and this feature is well detailed hereinafter.

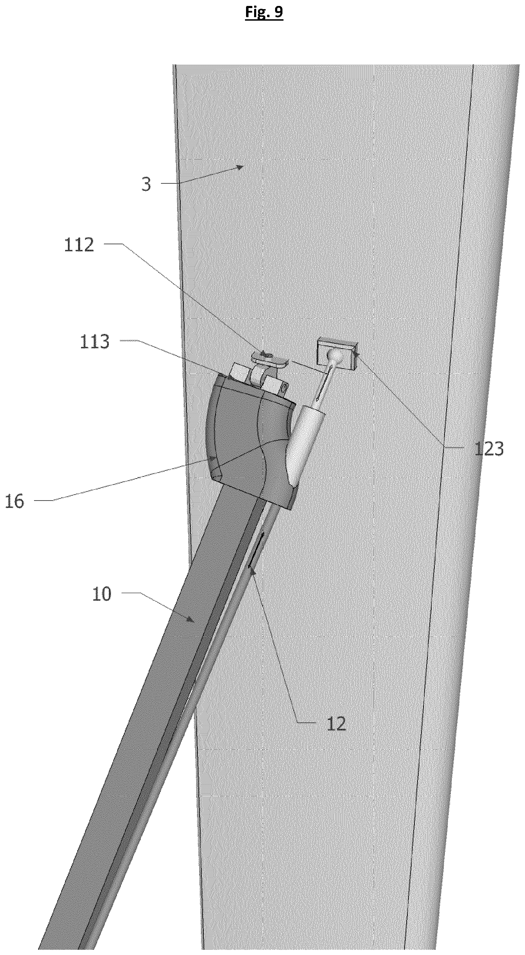

Particularly, the arms (10), therefore, house a rod (12) within them which longitudinally develops along the whole arm length (10), which continues the rectilinear trajectory when the construction line of the arm (10) changes direction in proximity of the blade (3) constituting a decentred lever arm with respect to the hinge anchoring the blade (3) (Fig. 5 and a detail in figure 9).

Even though the solution wherein the rod is connected in a channel of the arm is preferred since it is a more solid solution, however, it would be possible a solution wherein the rod (12) is external to the arm (10) but coupled with the rod (10) in any case.

On the opposite part the rod is fixed to a hinge (13) slidingly with respect to the shaft. More in detail, the rod (12) ends constraining itself to a spheric hinge (13) which is connected to the nut screw (7A; 7B). An arm is connected to the hinge (13) and with the said arm penetrating the slot (14) connecting to the scroll. The connection of such arm is such that the arm has sliding freedom along a plane orthogonal to the axis Z. Therefore, the hinge (13) protrudes from such second slot or sliding guide (14) having a different inclination from the slot (9) (Fig. 2; Fig. 5).

Hence, when the scroll moves along the sliding guide (9) the arm carrying the slot moves along the inclined sliding guide (14) and this sliding motion is possible since the hinge (13) has freedom of translating movement with respect to the scroll along the plane orthogonal to axis Z, for example slidingly mounting the supporting arm of the hinge (13) within a guide obtained in the scroll itself.

In substance, as it is shown in figure 5, it is highlighted for example the nut screw (7B) fixed to the rotating screw and sliding in its slot.

The nut screw itself supports one arm or element in general whereto the hinge 13 protruding from the slot 14 is connected. The hinge 13 is fixed to the rod 12.

The slot (14) has a specific inclination with respect to the slot with respect to which the hinge (8) of the rod (10) slides. Therefore, the slot (14) tends to move in an incident direction with respect to the slot (9). In substance, the development line of the slot (14) is not parallel to the development line of the slot (14).

Thus, during a scroll (7A, 7B) translation, the hinge (13) translates integrally with the scroll itself moving along a not-parallel but inclined trajectory with respect to the scroll trajectory.

This is evident since the guide or slot (14) along which the hinge (13) slides is not parallel to the guide or slot (9) but, but rather, an angle making incident the two directions exists.

The hinge (13) motion (see figure 2) along the inclined guide (14) is not obstructed given the freedom of the motion (particularly the translation) of the arm supporting the hinge and which, as it has been said, is free to move along a plane orthogonal to the axis Z, for example within the specific guide obtained in the scroll itself and within which said arm supporting the hinge 13 is slidingly engaged.

Therefore, as per figure 2, it is highlighted a specific position of the scroll (7A) and of the hinge (13).

Supposing a motion of the scroll 7A towards the opposite side of the slot, the same integral motion will be transmitted to the hinge 13 which, however, will move along its path moving close (or moving away depending on the direction of the motion) with respect to the scroll (7A) progressively. The result is that the rod (12) has a sort of axial motion which tends to push (therefore to move away from the shaft) or pull (therefore to move close to the shaft) the blade whereto it is connected. Indeed, the rod (12) is a substantially stiff element and therefore it is clear that such translation along the slot determines a movement of the rod which tends to push or pull the blade.

As mentioned, the blade is hinged to the rod (10) at a specific distance from the rod (12) so that an arm, which is the distance among the hinge and the fixing point of the rod (12), is made.

Accordingly, such forward/back motion of the rod (12) determines a rotating motion of the blade around its hinge modifying the incidence according to the extension/retraction position of the articulated system.

In accordance with this solution, therefore, the scrolls (7A, 7B) translation for opening or closing the pantograph system contextually controls a variation of Pitch of the blades, thanks to the stiff rods (12).

Therefore, it is important that the rod (12) is made integral with the rod (10) for being able to move together with it along its inclined path (that is to say, they translate together along the sliding guides), but free to have a sliding motion with respect to it. Thus, the solution arranging the rod 12 into the channel of the rod 10 is a preferred solution.

The figure 9 shows in detail a potential preferred solution wherein the connection to the blade of the rods 10 and 12 is highlighted.

The rod controlling the Pitch variation (or rather the rod 12) is externally placed to the rod 10 but it is engaged to it and sliding with respect to it, as also indicated by the double arrow direction.

The rod 12 has a spheric hinge 123 which connects it to the blade. The rod 10 is connected alongside with two hinges at a specific distance and particularly a first hinge 112 enabling a first rotation with respect to the hinge 112 which modifies the Pitch angle and a second rotation with respect to the hinge 113. Therefore, such two hinges form the hinge supporting the blade by means of which the rod 10 supports the blade connecting it to the shaft.

The rod 12 moves forward or backward with respect to the rod 10 (that is to say it slides parallel to it), depending on the radial distance of the blades with respect to the shaft, and this motion is still indicated in figure 9 with the double arrow direction applied to the rod 12, thereby modifying the Pitch angle. Indeed, when the blades close on themselves since the pantograph system closes, the hinge 13 moves integrally with the scroll solidly along its inclined guide thereby determining a translation of the rod 12 which, contextually to the opening/closing motion of the blades, changes the angle of inclination thereof.

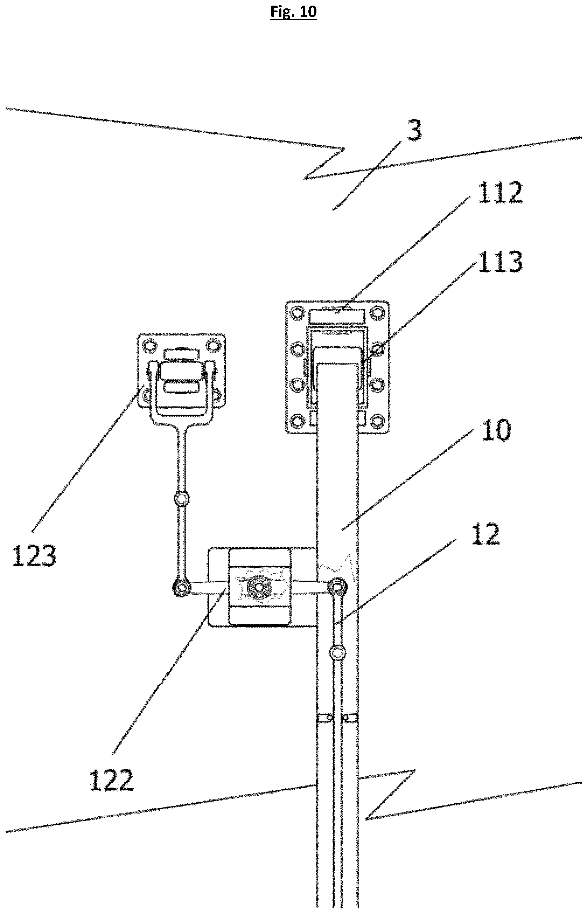

In figure 10 a second embodiment is schematized, wherein the rod is preferably slidingly inserted within a channel obtained in the body of the rod (10).

Specifically, the solution of figure 10 shows the rod 12 protruding from the rod 10 with a segment 122 hinged to the remaining part of rod arranged within the channel of the rod 10.

On the opposite side, this segment 122 is hinged to a final segment which, in turn, is connected to the hinge system 123 fixed to the blade. The double arrow direction applied to the rod 12 clarifies that the sliding motion of the rod 12 determines an activation of the leverage formed by the rod 12 with the segment 122 and final segment causing the blade to rotate around the hinge 112, thereby modifying the Pitch.

In this manner, therefore, a system is obtained wherein the angle of incidence of the blades (or PITCH) is a function of the extended or retracted position of the pantograph rods controlling the rods.

The different distance created between the slot (9) and the guide slot (14) is relative to the planes orthogonal to the rotation shaft along all possible positioning points of the nut screws (7A; 7B).

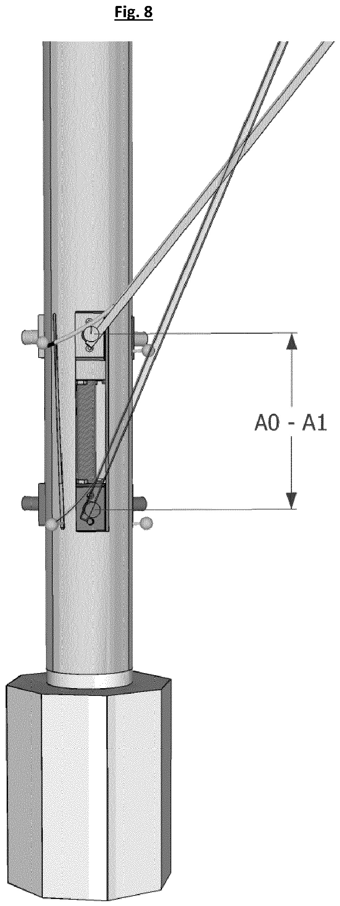

The difference of length among the arm (10) and the rod (12) (Fig.8), which comes out from "A0" to "A1" because of the different distance of the respective constraints (spheric hinge (13) and idle pin (8)) at the several positions of the nut screws between A0 and A1, provides the necessary movement to the blade (3) for varying its incidence with respect to the direction tangential to the circle subtended by the blade (3) rotating around the axis Z (Fig. 2; Fig 4; Fig. 8).

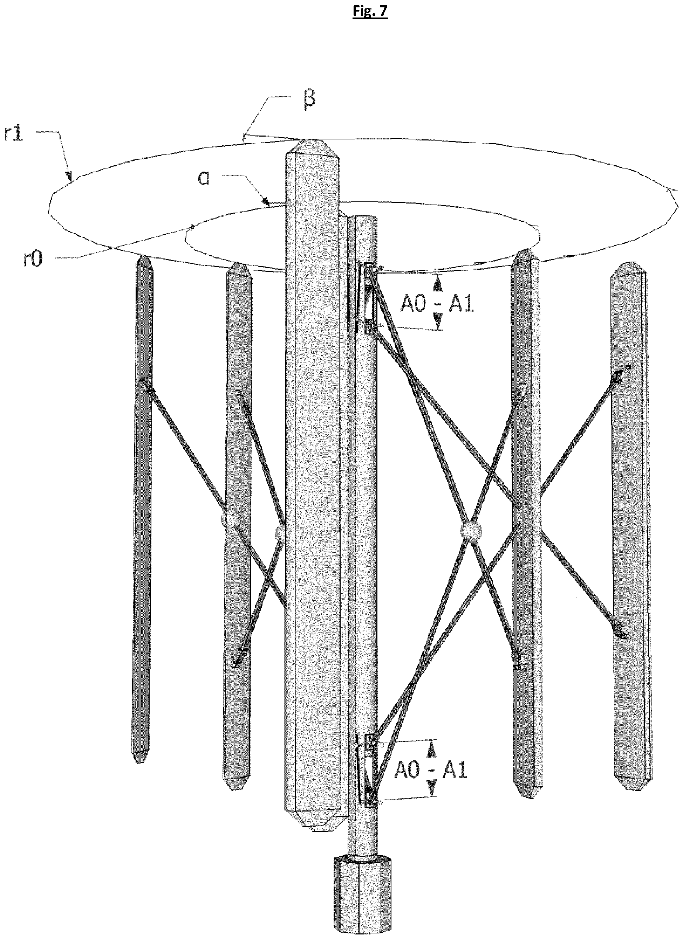

The turbine (1), thanks to a control system (15, not shown in the figure) has the ability, whether it is static or rotating, to acquire meteorological data in real time and to process them for controlling the motor (5) which activates the rotation of the rolled screw (6), which moves away or moves close the two nut screws (7A; 7B) reciprocally, defining the operative radius of each blade (3) and its optimal incidence (Fig. 7) for the current meteorological condition.

The turbine, as it is intended in the previous description, is applicable to all fields of wind or water kinetic energy transformation into usable mechanical energy which, adequately transformed, can:
- generate electrical energy in alternating or direct current;
- make the compressed air production available in big industrial factories as well as in small companies;
- activate oil-pressure hydraulic pumps;
- activate pumps for extracting or transferring drinking water, for irrigating fields or for the recovery of marshy areas;
- directly provide mechanical force to a flywheel for feeding a mechanical system or provide the motion for feeding a fan or for activating a compressor of a refrigeration cycle;
- feed through a forced ventilation the filter apparatuses placed in urban centres for air purification;
- provide a feed to certain electrolytic cells so that they separate the elements composing the electrolyte.

The subject turbine can be used both for *on-shore* and *offshore* installations enabling the utilization of areas with a superior wind and water energy density as the open seas or for the electricity generation in backcountries as islands, platforms or isolated places on the Earth.

The possibility of actively choose the diameter of the rotor enables the installation on traffic islands of expressways, where, thanks to the air speed of the vehicle slipstream, the rotation would be guaranteed and would be usable even for different conditions of the vehicular traffic.

The kinetic energy conversion process of a fluid into energy industrially usable with a turbine having the rotor of a variable diameter also comprises the possibility to transform kinetic energy of sea or river currents adopting the necessary tactics for the mechanic reshaping in the planning phase, for the profiles of the blades and keeping in consideration the marine corrosion action.

Among the several potential configurations modifying the present invention formally but not substantially, it would be possible a different modification mechanism of the incidence of the blades which transforms the angle variation of the pantograph mechanism into a torsion acting as a command on the supporting hinges of the blades, enabling the variation of their incidence without resorting to the control rod.

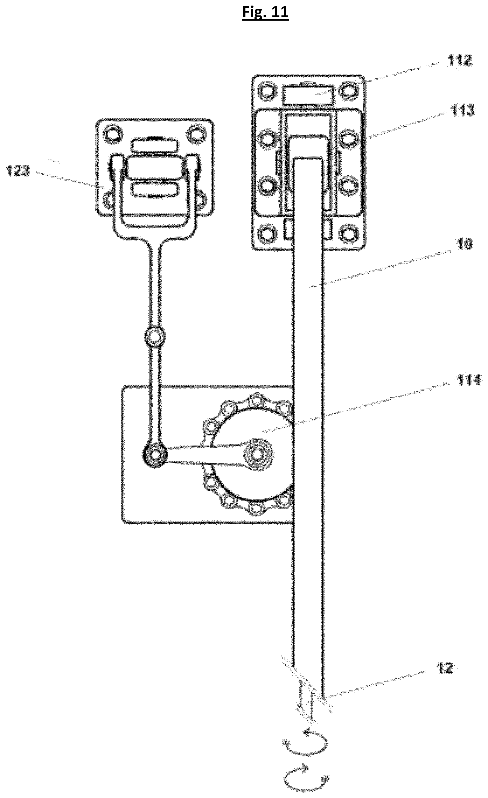

More specifically, throughout the diameter variation, the angles among the arms vary the reciprocal inclination with respect to the shaft. Therefore, it is possible to think of placing, rather than a pitch variation inclined slot, a small rack, still inclined as the slot, on the shaft which causes the pitch variation rod to rotate and which ends at its end towards the blade with an endless screw and this rotation adequately transmitted to a helical sprocket wheel 114 enables the pitch variation. This solution is schematized in figure 11 wherein therefore it is visible the rod (12) which rotates.

Therefore, the figure 11 shows the variation introduced hereinbefore wherein the rod 10 still includes within the rotating rod (12). Therefore, it is grooved as a screw so as to meshing with a sprocket wheel or the like. The rotation of the sprocket wheel transmits the activation of the hinge 123 to the corresponding leverage. Furthermore, it is possible to build a mechanism similar to the one of the present invention by eliminating the pantograph scheme unfastening the couples of arms and eliminating the floating hinge so as to constitute a mechanism where the scrolls moving away engender a contraction of the blade towards the shaft and vice versa. However, this solution entails a necessary superior constructive length of the rotating shaft.

Another variation can be brought to the guide slot (14) by eliminating it in favour of a track whereon a carriage engaging the rod (12) slides.

Furthermore, it is possible to vary the incidence of the blades by using a scheme according to which the rotation of the idle pin, replacing it with an eccentric cam constraining both the arm 10 and the rod 12, engenders the variation in length of a rod contained in the supporting arm for which the necessary excursion to the variation of incidence is obtained.

More specifically, it is possible to eliminate the guide slot and to use the rotation of the idle pin in the event there is enough distance between the anchoring point of the blade (on the pin) and the anchoring point of the rod (still on the pin). Throughout its rotation, hence, one of the two rods will move forward or backward with respect to the rotation axis of the pin.

This invention, among other things, can find a use even in the exploitation of kinetic energy of sea or river currents varying the executive features but maintaining the same functioning scheme.

The turbine positioning, as per the invention, can be any and therefore can be alongside a rotation axis different from Z (for example, making it rotate horizontally on the peak of a pitched roof).

In a further embodiment, only one scroll which moves so as to move a lever leverage as per the described opening/closing condition of the blades, instead of two counterposed ones, can be present.

Lastly, a further embodiment wherein the rod 10 still includes within itself the rod 12 which moves towards a forward/backward direction as described. Nevertheless, it is grooved so as to mesh with a sprocket wheel or the like. The rotation of the sprocket wheel transmits the activation of the hinge 123 to the corresponding leverage.

**Legend of some components of drawings:**

| | | | |
|---|---|---|---|
| 1) | Turbine | 5) | Motor for moving the rolled screw |
| 2) | Rotating shaft | | |
| 3) | Blade | 6) | Rolled screw |
| 4) | Utility | 7A) | Lower nut screw |
| 7B) | Upper nut screw | 15) | Control system (not shown in the figure) |
| 8) | Idle pin | | |
| 9) | Window slot | 16) | Hinge for anchoring the blade |
| 10) | Arm or rod supporting the blade | 112) | Rotating hinge as per one axis |
| | | 113) | Rotating hinge connected to the hinge 112 and rotating according to an additional axis |
| 11) | Floating hinge | | |
| 12) | Rod for modifying the Pitch | | |
| 13) | Spheric hinge | 123) | Spheric hinge |
| 14) | Guide slot inclined with respect to slot 9 | | |

## Claims

1. A wind or water turbine (1) comprising at least two or more blades (3) and a rotating shaft (2) whereto the said blades (3) are connected, each blade being connected to the rotating shaft through a system of rods (10, 12), so that such system of rods can pass from an extended position and a retracted position, thereby enabling a radial distance variation of the blade placement with respect to the rotating shaft, each system of rods being hinged to the corresponding blade in at least one point so as to further enable a rotation of the blade in order to vary its angle of incidence, the said system of rods (10, 12) being further configured to modify the angle of incidence of the blades as a function of the specific extended or retracted position adopted by the said system of rods so that each blade adopts a specific angle of incidence according to its radial distance from the rotating shaft (2) wherein the turbine further comprises an actuating system (13, 14) controlling the said rotation of the said blade so as to position it as per a specific angle of incidence, the said actuating system being synchronized so that the said actuating system modifies the angle of incidence of the blades as a function of the specific extended or retracted position adopted by the said system of rods, each system of rods being made up of at least two rods (10) which are slidingly connected by one of their ends to the shaft along a first sliding guide (9) developing along at least one section of the rotating shaft (2) length and by the opposite end being hinged, at least one of them, to the blade so that the sliding of such ends of the rods along the rotating shaft determines an extension or a retraction of such system of rods causing a moving away or a moving close of the blades from/to the shaft and with the said hinge enabling a modification of the angle of incidence;
**Characterized in that** the said actuating system comprises a second sliding guide (14) which develops along at least one section of the rotating shaft length according to an inclined direction with respect to the development line of the first sliding guide (9) so that the development line of the second sliding guide (14) is incident with respect to the development line of the first sliding guide (9) and wherein it is comprised at least one rod (12) with a predetermined length slidingly connected by one of its ends along the said second sliding guide (14) and by the opposite end being connected to the blade in a point, the said rod (12) end being configured so as to move integrally with at least one rod end (10) sliding along the first sliding guide (9) so that, in correspondence with a contextual sliding of the rod (12) end and of the rod end (10) relative to the system of rods articulated along the respective sliding guides, the incident paths determine a translation of the rod (12) with respect to the rod (10) with a consequent transmission of the rod (12) force on the blade at its connection point thereby causing, contextually to the articulated extension or retraction motion of the system of rods, a contextual rotation of the blade around its hinge with the at least one rod (10) thereby modifying the incidence of the blade according to the extended or retracted position the blade adopts .

2. The turbine (1), as per claim 1, wherein the actuating system is configured to be activated in correspondence with a motion of the system of rods.

3. The turbine (1), as per claim 1 or 2, wherein the system of rods (10, 12) is an articulated system of rods so that such rods can pass from an extended position to the retracted position which corresponds to the position wherein such rods constituting the articulated system are closed on themselves.

4. The turbine (1), as per one or more of the hereinabove claims from 1 to 3, wherein the said at least two rods are X-shaped crossed.

5. The turbine, as per claim 1, wherein the rod (12) is movable along a direction so as to transmit the said force.

6. The turbine, as per claim 1 or 5, wherein the rod (12) is a stiff rod.

7. The turbine, as per one or more of the hereinabove claims, wherein the rod (12) is slidingly mounted within an axial channel obtained along the axial length of the rod (10) so as to move integrally with the rod (10).

8. The turbine, as per one or more of the hereinabove claims, wherein the rod (12) is coupled externally to the rod (10) so as to move integrally with the rod (10).

9. The turbine, as per one or more of the hereinabove claims, wherein it is comprised at least one screw (6) rotatably arranged within an axial channel of the rotating shaft (2) and a motor (5) causing the said at least one screw to rotate, the said two rods of the articulated system of rods forming a X-shaped rods and connecting each one of the said rods to the said at least one screw, or to two independent screws, through a scroll (7A, 7B) meshing with the screw so that the rotation towards a direction or towards the opposite direction causes a translation of the scrolls causing the two X-shaped rods to close on themselves or to extend.

10. The turbine, as per claim 9, wherein the scroll (7A, 7B) is connected integrally with the rod (12) end, which is translatable through a hinge (18).

11. The turbine, as per one or more of the hereinabove claims, wherein it is comprised a control system controlling the extension and/or retraction of the articulated system of rods as a function of one or more external parameters acting on the turbine.

12. The use of a turbine, as per one or more of the hereinabove claims, to accumulate energy from air or from a liquid.

## Patentansprüche

1. Wind- oder Wasserturbine (1), umfassend mindestens zwei oder mehrere Schaufeln (3) und eine Drehwelle (2), mit der die Schaufeln (3) verbunden sind, wobei jede Schaufel mit der Drehwelle durch ein System von Stäben (10, 12) verbunden ist, sodass ein solches System von Stäben aus einer ausgefahrenen Position und einer eingefahrenen Position übergehen kann, wodurch eine radiale Abstandsvariation der Schaufelpositionierung in Bezug auf die Drehwelle ermöglicht wird, wobei jedes System von Stäben an mindestens einem Punkt an der entsprechenden Schaufel angelenkt ist, um ferner eine Drehung der Schaufel zu ermöglichen, um ihren Anstellwinkel zu variieren, wobei das System von Stäben (10, 12) ferner konfiguriert ist, um den Anstellwinkel der Schaufeln als Funktion von der spezifischen ausgefahrenen oder eingefahrenen Position zu modifizieren, die von dem System von Stäben eingenommen wird, so dass jede Schaufel einen spezifischen Anstellwinkel gemäß ihrem radialen Abstand von der Drehwelle (2) einnimmt, **wobei** die Turbine ferner ein Betätigungssystem (13, 14) umfasst, das die Drehung der Schaufel steuert, um sie gemäß einem spezifischen Anstellwinkel zu positionieren, wobei das Betätigungssystem synchronisiert ist, so dass das Betätigungssystem den Anstellwinkel der Schaufeln als Funktion von der spezifischen ausgefahrenen oder eingefahrenen Position modifiziert, die von dem System von Stäben eingenommen wird, wobei jedes System von Stäben aus mindestens zwei Stäben (10) besteht, die durch einen seiner Enden gleitend mit der Welle entlang einer ersten Gleitführung (9), die sich entlang mindestens eines Abschnitts der Länge der Drehwelle (2) entwickelt, und durch das gegenüberliegende Ende verbunden sind, das mindestens eines von ihnen, an der Schaufel angelenkt sind, so dass das Gleiten dieser Enden der Stäben entlang der Drehwelle ein Ausfahren oder ein Einfahren eines solchen System von Stäben herbeiführt, das ein Wegbewegen oder ein Annähern der Schaufel von der/ an die Welle bewirkt, und wobei das Gelenk eine Modifizierung des Anstellwinkels ermöglicht;
**dadurch gekennzeichnet, dass** das Betätigungssystem eine zweite Gleitführung (14) umfasst, die sich entlang mindestens eines Abschnitts der Länge der Drehwelle gemäß einer geneigten Richtung in Bezug auf die Entwicklungslinie der ersten Gleitführung (9) entwickelt, so dass die Entwicklungslinie der zweiten Gleitführung (14) in Bezug auf die Entwicklungslinie der ersten Gleitführung (9) einfällt und wobei mindestens ein Stab (12) mit einer vorbestimmten Länge enthalten ist, der durch eines seiner Enden entlang der zweiten Gleitführung (14) gleitend verbunden ist und durch das gegenüberliegende Ende an einem Punkt mit der Schaufel verbunden ist, wobei das Stabende (12) so konfiguriert ist, dass es sich einstückig mit mindestens einem Stabende (10) bewegt, das entlang der ersten Gleitführung (9) gleitet, so dass an einem kontextuellen Gleiten des Stabendes (12) und des Stabendes (10) relativ zu dem System von Stäben, die entlang der jeweiligen Gleitführungen angelenkt sind, die einfallenden Pfade eine Verschiebung des Stabs (12) in Bezug auf den Stab (10) mit einer konsequenten Übertragung der Kraft des Stabs (12) auf die Schaufel an ihrem Verbindungspunkt bewirken, wodurch kontextuell zu der gelenkigen Ausfahr- oder Einfahrbewegung des Systems von Stäben eine kontextuelle Drehung der Schaufel um ihr Gelenk mit dem mindestens einen Stab (10) verursacht wird, wodurch der Anstellwinkel der Schaufel gemäß der ausgefahrenen oder eingefahrenen Position, die die Schaufel einnimmt, modifiziert wird.

2. Turbine (1) nach Anspruch 1, wobei das Betätigungssystem konfiguriert ist, um an einer Bewegung des Systems von Stäben aktiviert zu werden.

3. Turbine (1) nach Anspruch 1 oder 2, wobei es sich beim System von Stäben (10, 12) um ein gelenkiges System von Stäben handelt, so dass solche Stäbe von einer ausgefahrenen Position in die eingefahrene Position übergehen können, die der Position entspricht, in der solche Stäbe, die das gelenkige System bilden, in sich geschlossen sind.

4. Turbine (1) nach einem oder mehreren der vorhergehenden Ansprüche 1 bis 3, wobei die mindestens zwei Stäbe X-förmig gekreuzt sind.

5. Turbine nach Anspruch 1, wobei der Stab (12) entlang einer Richtung beweglich ist, um die Kraft zu übertragen.

6. Turbine nach Anspruch 1 oder 5, wobei der Stab (12) ein steifer Stab ist.

7. Turbine nach einem oder mehreren der vorhergehenden Ansprüche, wobei der Stab (12) gleitend in einem axialen Kanal montiert ist, der entlang der axialen Länge des Stabs (10) erhalten wird, um sich einstückig mit dem Stab (10) zu bewegen.

8. Turbine nach einem oder mehreren der vorhergehenden Ansprüche, wobei der Stab (12) extern des Stabs (10) gekoppelt ist, um sich einstückig mit dem Stab (10) zu bewegen.

9. Turbine nach einem oder mehreren der vorhergehenden Ansprüche, wobei wenigstens eine Schraube (6), die drehbar in einem axialen Kanal der Drehwelle (2) angeordnet ist, und ein Motor (5) enthalten sind, der veranlasst, dass sich die wenigstens eine Schraube dreht, wobei die zwei Stäben des gelenkigen System von Stäben X-förmige Stäbe bilden und jede der Stäbe mit der mindestens einen Schraube oder mit zwei unabhängigen Schrauben durch eine Spirale (7A, 7B) verbinden, die mit der Schraube gekämmt ist, so dass die Drehung in eine Richtung oder in die entgegengesetzte Richtung eine Verschiebung der Spiralen bewirkt, die veranlasst, dass sich die zwei X-förmigen Stäbe sich schließen oder ausfahren.

10. Turbine nach Anspruch 9, wobei die Spirale (7A, 7B) einstückig mit dem Ende des Stabs (12) verbunden ist, die durch ein Gelenk (18) verschiebbar ist.

11. Turbine nach einem oder mehreren der vorhergehenden Ansprüche, wobei ein Steuersystem enthalten ist, das das Ausfahren und/oder Einfahren des gelenkigen Systems von Stäben als Funktion von einem oder mehreren externen Parametern steuert, die auf die Turbine wirken.

12. Verwendung einer Turbine nach einem oder mehreren der vorhergehenden Ansprüche zum Speichern von Energie aus Luft oder aus einer Flüssigkeit.

## Revendications

1. Turbine éolienne ou hydraulique (1) comprenant au moins deux ou plusieurs pales (3) et un arbre rotatif (2) auquel lesdites pales (3) sont reliées, chaque pale étant reliée à l'arbre rotatif par un système de tiges (10, 12), de sorte que ce système de tiges peut passer d'une position étendue à une position rétractée, permettant ainsi une variation de la distance radiale de l'emplacement de la pale par rapport à l'arbre rotatif, chaque système de tiges étant articulé à la pale correspondante en au moins un point de manière à permettre une rotation de la pale afin de faire varier son angle d'incidence, ledit système de tiges (10, 12) étant en outre configuré pour modifier l'angle d'incidence des pales en fonction de la position étendue ou rétractée spécifique adoptée par ledit système de tiges de sorte que chaque pale adopte un angle d'incidence spécifique en fonction de sa distance radiale par rapport à l'arbre rotatif (2) **dans laquelle** la turbine comprend en outre un système d'actionnement (13, 14) contrôlant ladite rotation de ladite pale de manière à la positionner selon un angle d'incidence spécifique, ledit système d'actionnement étant synchronisé de sorte que ledit système d'actionnement modifie l'angle d'incidence des pales en fonction de la position spécifique étendue ou rétractée adoptée par ledit système de tiges, chaque système de tiges étant constitué d'au moins deux tiges (10) reliées de manière coulissante par l'une de leurs extrémités à l'arbre le long d'un premier guide coulissant (9) se développant sur au moins une section de la longueur de l'arbre rotatif (2) et par l'extrémité opposée étant articulée, au moins pour l'une d'entre elles, à la pale de sorte que le coulissement de ces extrémités de tiges le long de l'arbre rotatif détermine une extension ou une rétraction de ce système de tiges provoquant un éloignement ou un rapprochement des pales delà l'arbre et avec ladite charnière permettant une modification de l'angle d'incidence ;
**caractérisée en ce que** ledit système d'actionnement comprend un second guide coulissant (14) qui se développe le long d'au moins une section de la longueur de l'arbre rotatif selon une direction inclinée par rapport à la ligne de développement du premier guide coulissant (9) de sorte que la ligne de développement du second guide coulissant (14) est incidente par rapport à la ligne de développement du premier guide coulissant (9) et dans lequel il est composé d'au moins une tige (12) d'une longueur prédéterminée reliée de manière coulissante par l'une de ses extrémités le long dudit second guide coulissant (14) et par l'extrémité opposée étant reliée à la pale en un point, ladite extrémité de la tige (12) étant configurée pour se déplacer intégralement avec au moins une extrémité de la tige (10) coulissant le long du premier guide coulissant (9) de sorte que, en correspondance d'un coulissement contextuel de l'extrémité de la tige (12) et de l'extrémité de la tige (10) par rapport au système de tiges articulées le long des guides coulissants respectifs, les trajectoires incidentes déterminent une translation de la tige (12) par rapport à la tige (10) avec une transmission conséquente de la force de la tige (12) sur la pale à son point de liaison, provoquant ainsi, dans le contexte du mouvement articulé d'extension ou de rétraction du système de tiges, une rotation contextuelle de la pale autour de sa charnière avec l'au moins une tige (10), modifiant ainsi l'incidence de la pale en fonction de la position étendue ou rétractée qu'elle adopte.

2. Turbine (1), selon la revendication 1, dans laquelle le système d'actionnement est configuré pour être activé en correspondance avec un mouvement du système de tiges.

3. Turbine (1), selon la revendication 1 ou 2, dans laquelle le système de tiges (10, 12) est un système articulé de tiges de sorte que ces tiges peuvent passer d'une position étendue à la position rétractée qui correspond à la position dans laquelle les tiges constituant le système articulé sont fermées sur elles-mêmes.

4. Turbine (1), selon l'une ou plusieurs des revendications précédentes de 1 à 3, dans laquelle lesdites au moins deux tiges sont croisées en forme de X.

5. Turbine selon la revendication 1, dans laquelle la tige (12) est mobile le long d'une direction de manière à transmettre ladite force.

6. Turbine selon la revendication 1 ou 5, dans laquelle la tige (12) est une tige rigide.

7. Turbine, selon une ou plusieurs des revendications précédentes, dans laquelle la tige (12) est montée coulissante dans un canal axial obtenu le long de la longueur axiale de la tige (10) de manière à se déplacer intégralement avec la tige (10).

8. Turbine, selon une ou plusieurs des revendications précédentes, dans laquelle la tige (12) est couplée extérieurement à la tige (10) de manière à se déplacer intégralement avec la tige (10).

9. Turbine, selon une ou plusieurs des revendications précédentes, dans laquelle elle comprend au moins une vis (6) disposée de manière rotative dans un canal axial de l'arbre rotatif (2) et un moteur (5) entraînant la rotation de ladite au moins une vis, lesdites deux tiges du système articulé de tiges formant une tige en forme de X et reliant chacune desdites tiges à ladite au moins une vis, ou à deux vis indépendantes, par l'intermédiaire d'une spirale (7A, 7B) s'engrenant avec la vis de sorte que la rotation vers un sens ou vers le sens opposé provoque une translation des spirales entraînant les deux tiges en X à se refermer sur elles-mêmes ou à s'étendre.

10. Turbine selon la revendication 9, dans laquelle la spirale (7A, 7B) est reliée intégralement à l'extrémité de la tige (12), qui est mobile par l'intermédiaire d'une charnière (18).

11. Turbine, selon l'une ou plusieurs des revendications précédentes, dans laquelle elle comprend un système de commande contrôlant l'extension et/ou la rétraction du système articulé de tiges en fonction d'un ou plusieurs paramètres externes agissant sur la turbine.

12. Utilisation d'une turbine, selon l'une ou plusieurs des revendications précédentes, pour accumuler l'énergie de l'air ou d'un liquide.
